# EUROPEAN PATENT APPLICATION

(11) **EP 4 592 982 A1**
(43) Date of publication of application: **30.07.2025**
(21) Application number: 24382083.4
(22) Date of filing: 29.01.2024
(51) Int. Cl.: G08B 21/04, G08B 29/18, G06N 3/08, G08B 25/01

(54) **METHOD AND SYSTEM FOR EMERGENCY MONITORING AND ACTING IN DOMESTIC ENVIRONMENTS**

(71) Applicant: Telefónica Innovación Digital, S.L.U., 28011 Madrid (ES)
(72) Inventor: LÓPEZ GAVILÁNEZ, Wiliam Fernando, 28011 MADRID (ES); SEGURA PERALES, Carlos, 28011 MADRID (ES); LUQUE SERRANO, Jordi, 28011 MADRID (ES); GÓMEZ GUERRERO, Pablo, 28011 MADRID (ES)
(74) Representative: Herrero & Asociados, S.L.

(57) **Abstract**

A method and system for emergency monitoring and acting in domestic environments of a user (10), wherein a data stream capturing device (310) provides data for local processing (320) in a user end device (300). This involves classifying events using a lightweight neural network and triggering actions if emergency is detected based on the events classification. In case of emergency, an external user (20) is notified through an external user end device (330) to manage the situation by selecting actions from the set of triggered actions and provides a validation (370) on whether the actions were correctly taken once the situation is under control. The causality supervisor (340) reviews the log of events and actions (360) and the validation (370) from the external end device (330) for improvements. The local knowledge database (380) is updated to adapt or reinforce behaviour (350) based on the detected emergencies and triggered actions. Also, the user (10) can provide feedback to adapt the system as the causality supervisor (340), for example, if a false negative happens.

## Description

### TECHNICAL FIELD

The present invention relates generally to intelligent systems detection and management of domestic emergencies.

More particularly, the present invention relates to a method and system for emergency monitoring and acting in domestic environments with continuous improvement, as the method and system continuously learn by using the feedback obtained from a causality supervisor and the validation of different actors that may participate in the emergency management and improve this management by analysing past events and actions.

### BACKGROUND OF THE INVENTION

For companies focusing on the home environment, digitalization, and the relationship between family members or relatives, the development of a detection system for accidents, violence or emergency situations is very attractive. Nowadays, global society is facing several challenges related to elderly loneliness, domestic violence, and childhood and disabled people's rights. In this context, such a system should consider the following social challenges:
- The aging population, as 20.8% of the EU population was over 65 years in 2021. The European directions try to deal with social isolation and loneliness, among other factors within this group of people. Loneliness especially represents a major risk factor for mental and physical illness.
- Victims of gender-based violence (GBV) are also a European social concern. In the domestic environment, women suffer physical, sexual, psychological, or economic harm.
- Similarly, it is sought to defend the rights of people with disabilities and ensure the independent living and inclusion of everyone.

That is, mental and physical health prevention and actuation systems are crucial to ensure the population's autonomy, independence, safety, and participation in social life. The use of digital tools can be an essential component to guarantee an active and healthy life. Ensuring safety and accessibility in people's own homes is crucial to prevent injuries that may lead to dependency, physical and mental deterioration. Therefore, it is essential to detect accidents, violence, abuse, or other events that may compromise people's health in the domestic environment and act accordingly depending on their severity. By taking proactive measures, worse scenarios can be avoided as well as the overall wellbeing of individuals can be promoted.

Traditional emergency monitoring systems often lack the ability to proactively detect emergency situations, leading to delays in acting or alerting caregivers or families. Furthermore, many existing systems rely on external servers for processing domestic information, which raises concerns regarding data privacy and security. Thus, an effective and secure domestic emergency monitoring system is essential. Safety and wellbeing of individuals can be ensured by implementing a system that continuously improves in how to proactively detect emergencies and promptly act to manage the emergency.

In the current state of the art, certain solutions rely on a dedicated device containing specific hardware components such as sensors, memories, or Micro Controller Units (MCU). However, these approaches suffer from several drawbacks. For example, the use of emergency or panic buttons/beacons requires individuals to consistently wear them all the time. Furthermore, the effectiveness of these devices is contingent upon the battery life, which can potentially constrain the ability to report accidents. Additionally, in certain scenarios, the user must actively report the occurrence of an emergency.

In the context of domestic accident/emergency monitoring, a proactive system that autonomously detects the user's need for help is ideal. Thus, natural interfaces such as speech-triggered interfaces are preferred. Some of the systems are based on speech analysis to trigger actions or communications outside the monitoring space.

Solutions based on speech recognition present some drawbacks:
- Inefficient schemes of speech processing imply transcribing the whole audio stream. Added to the energy wastage, words used out of context can cause false positives.
- Sending the stream outside the monitoring space presents privacy concerns. In addition, the delay in the detection of emergencies may be affected by the network latency.

Other solutions are based on speech interaction with users. A scheme where the user is frequently asked about its state is presented. The drawbacks of these solutions are:
- The monitored user maintains conversations with devices without involving other humans in the loop. Thus, the monitored user may lack interaction with other humans.
- The monitored user must understand how the system works and be always available to answer to avoid false positives. The heavy reliance on user responsiveness can be a significant problem in emergency situations where the user may be unable to respond. For instance, a person under shock can have incongruent speech where sentences can be nonsense, or they simply cannot maintain a continued conversation.
- Speech recognition technologies may interfere with speech from multimedia sources present at homes: background conversations, music, or TV.

Consequently, the unsolved problems are:
- A major part of the solutions depends on the existence of a dedicated device that comprises concrete hardware (e.g., battery or wireless connection). A solution that can be executed in a broad set of devices is preferred.
- Assistive technology should be inclusive and accessible, so a simple and effective monitoring and alarm notification scheme is required. The effectiveness of the system must not be affected because of its complexity. Practices such as combining too many sources of information or defining a complex interaction scheme with machines must be avoided.
- User's privacy must be preserved so that locally processing of user's data is preferred rather than sending any multimedia information to a server.
- The solution must be fast enough to quickly act within the detection of emergencies. Schemes that include the use of complex technologies such as Speech-To-Text or Transformed-based models do not fit well, as they do not allow real-time processing.
- Most of the State-of-The-Art present difficulties in distinguishing between true emergencies and false positives, causing unnecessary triggers and potentially compromising the effectiveness of the system. A robust emergency detection must be guaranteed to avoid inefficient resource waste.
- The limitations in the applicability of some systems to low and middle-income settings due to dependence on specific features or resources must be avoided. Technology that does not require anything from the user but to have the device present at its home is preferred. Similarly, the solution should not depend on specific scenarios but work in a broad set of situations.
- Some of the existing solutions propose interaction with machines. However, human interaction is preferred in the context of emergency management.

Therefore, there is a need of providing domestic environments with emergency detection systems which do not depend on specific scenarios but work efficiently in a broad set of situations and devices and which allow a quick re-action to the detected emergency.

### SUMMARY OF THE INVENTION

The problems found in prior art techniques are generally solved or circumvented, and technical advantages are generally achieved, by the disclosed embodiments which provide an always learning method and system to monitor emergency situations by detecting indoor events and take an action based on the detected events.

The present invention is based on edge computing for indoor event detection, guarantying efficient and privacy-preserving data processing. Upon emergency events detection, actions are triggered. Actors that participate in the emergency management provide its validation of the set of events, actions, and if it those events required of its participation. Finally, a causality supervisor determines how to adapt or reinforce the predefined behaviour. Within this approach, the system continuously learns from its own use.

The proposed system captures and analyses a stream of information utilizing existing devices in an indoor space. This stream of data is then processed locally, ensuring privacy-preserving data management, and removing any delay within the detection. If an emergency is detected, the system triggers either local or third-party actions, depending on the type of emergency. All organizations involved in emergency management provide validation after the emergency is under control. The system logs all activity and is evaluated by a causality supervisor to determine if events triggered the right actions. The supervision from this causality supervisor allows the system to adapt and reinforce its behaviour by learning from its own use. The self-learning of the detection algorithms is 'self-supervised' and based on previous interventions (either validated or not through humans either automatically validated).

An aspect of the present invention refers to a method for emergency monitoring and acting in domestic environments which comprises the following steps:
- capturing information streams by a home user end device located in a domestic environment of a user (user's environment),
- detecting events by locally processing the captured information streams by the home user end device, wherein the locally processing uses a lightweight neural network configured to classify the detected events by performing pattern recognition;
- detecting by the home user end device whether there is an emergency based on the classified events and information from a knowledge database to which the home user end device has access;
- if emergency is detected, triggering a set of actions by the home user end device predefined in the knowledge database for the detected emergency;
- receiving data through a first communication protocol from the home user end device to a causality supervisor, the data comprising a log of the detected events and, if emergency detected, of the triggered actions,
- evaluating the received data periodically by the causality supervisor to determine whether all the set of triggered actions is correctly taken,
- updating the knowledge database by the causality supervisor according to the evaluation of the received data, and
- delivering a feedback based on the evaluation by the causality supervisor to the lightweight neural network and the lightweight neural network learning from the feedback.

Another aspect of the present invention refers to a system implementing the emergency monitoring and acting method described above for domestic environments, comprising a home user end device of a user located in a user's environment, the home user end device configured to:
- capture information streams,
- detect events by locally processing the captured information streams, wherein the locally processing uses a lightweight neural network configured to classify the detected events by performing pattern recognition;
- detect whether there is an emergency based on the classified events and information from a knowledge database to which the home user end device has access; and, if emergency is detected, trigger a set of actions predefined in the knowledge database for the detected emergency;
wherein the home user end device is communicated through a first communication protocol with a causality supervisor configured to:
- receive data through the first communication protocol, the data comprising a log of the detected events and, if emergency detected, of the triggered actions,
- periodically evaluate the received data to determine whether all the set of triggered actions is correctly taken for the log of the detected events,
- update the knowledge database according to the evaluation of the received data and deliver a feedback based on the evaluation to the lightweight neural network, the lightweight neural network learning from the feedback.

The invention is defined by the independent claims. The dependent claims define advantageous embodiments.

The system/method in accordance with the above-described aspects of the invention has a number of advantages with respect to the aforementioned prior art, which can be summarized as follows:
- The present invention can be executed in a broad set of devices. Not having a complex scenario of being hardware constrained.
- The present invention meets the requirements of being inclusive and accessible, since a simple and effective monitoring and alarm notification scheme is proposed.
- User's privacy is preserved as locally processing of user's data is done rather than sending any multimedia information out of the user's home environment (e.g., to a remote server).
- Efficient, accurate and lightweight neural networks are used to detect emergency words or any acoustic events. Thus, there are no delays within the detection of emergencies.
- False positives are avoided adapting the detection to the speaker and the domestic environment.
- A robust emergency detection must be guaranteed to avoid inefficient resource waste.
- Low and middle-income settings are covered as no specific features or resources are needed.
- When an emergency or an accident happens, interaction with a trusted person is guaranteed. The feedback from the trusted person is used a posteriori for self-supervised system adaptation to avoid future false positives.

### BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows an overview of the emergency monitoring and acting system flow.
Figure 2 shows a detailed view of the emergency detection and action triggering process of Figure 1.
Figure 3 shows a schematic diagram of local audio capture, processing, and action triggering processes, according to a preferred embodiment of the present invention.
Figure 4 shows a schematic diagram of the two-step enrolment process for user's personalization, according to a preferred embodiment of the present invention.
Figure 5 shows a flow diagram of the emergency monitoring and acting method performed by the system once the enrolment process is completed.
Figure 6 shows an on-device real-time audio processing pipeline, according to a possible use of the emergency monitoring and acting system in a real-time processing scenario.

### DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention propose an emergency monitoring and acting system that continuously improves by using feedback provided by a causality supervisor. The set of past events and actions is analysed to evaluate its causality. This evaluation is complemented by the validation of actors that may participate in managing or attending the emergency. Within this scheme, the emergency detection and management system continuously are improved by learning from its own use. The periodic evaluation of the data set of past events and actions serves to determine if all the triggered actions are executed correctly and properly for the associated events. This evaluation is crucial for the self-learning aspect of the even detection process, ensuring they continuously improve and adapt based on their performance assessments.

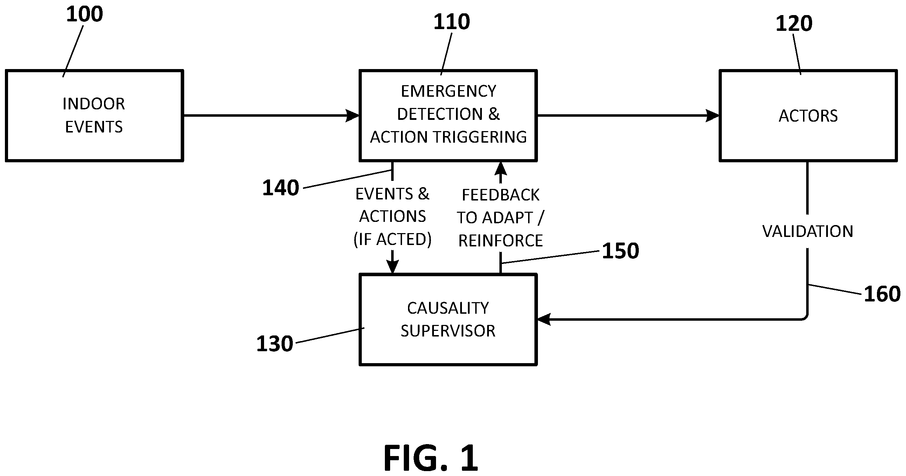

Figure 1 presents an overview of the system flow. In an indoor environment, such as a home, a continuous stream of information is captured and analysed. Indoor events (audio events or video events, or words that are a sign of emergency) are monitored 100 by a home user's device from the analysis of captured streams of information. This process of monitoring events 100 in the home domain is carried out locally using an existing device in the users' spaces. The results from the analysis of captured streams of information are input to an emergency detector and actions trigger 110. Depending on the chain of happening events resulting from the indoor information analysis, an emergency is detected, and then predefined actions are taken. These sets of events and actions **140** are analyzed to evaluate their causality by a causality supervisor **130.** This causality information is complemented with the validation **160** of actors **120** that may participate. Then, the feedback **150,** provided by a human or automatically generated, is used to adapt or reinforce the future behaviour of the system. The validation **160** from actors **120** is also used to complement the causality analysis. The information capture and processing are not computationally demanding, allowing them to be performed in real-time while maximizing energy efficiency. As a result, users' privacy is preserved, and no additional hardware is necessary.

To continue with, the analysis of indoor information enables the detection of relevant events that indicate users' safety concerns. These events are used to determine whether an emergency is occurring, which can be the result of a single event or a combination of multiple events. When a user faces an emergency, the system triggers a corresponding action or a set of actions. The nature of these actions varies depending on the severity of the emergency and may involve the participation of third parties. In such cases, the management of the emergency is fully delegated to these third-party actors, who take necessary measures to address the situation. Once the emergency is under control, these actors **120** provide a validation **160** whether the set of events that occurred truly warranted their involvement.

The system actively supervises all activities, including past events and actions, if the system acted, by means of the causality supervisor **130** together with the actor's validation **160.** The causality between events and actions is carefully evaluated by the causality supervisor **130,** and possible improvements are actively sought. The evaluation involves determining if the events correctly triggered the appropriate actions and, if necessary, defining a new behaviour. This feedback **150** loop allows the system to adapt and reinforce future behaviour. By using this approach of feedback **150,** the emergency management and acting, continuously improves by learning form its own use.

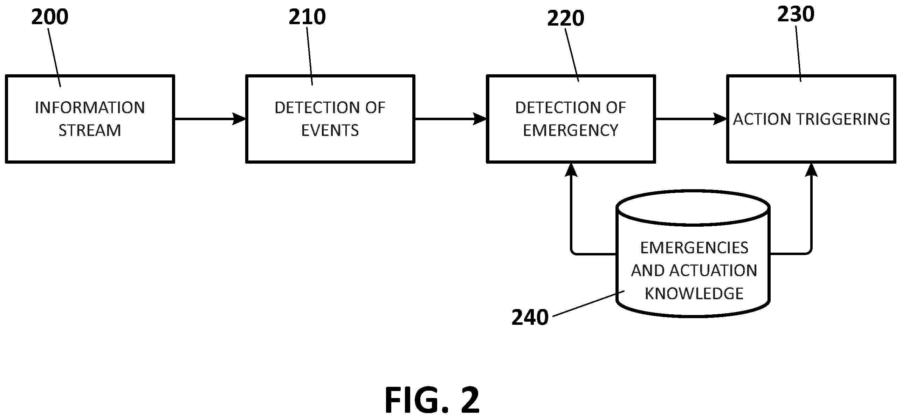

Figure 2 provides a detailed view of the process of emergency detection and action triggering **110.** The process begins by capturing and locally processing a stream of information **200** to detect events **210** relevant to the user's safety. The events to be detected can be either audio or video events, or (triggering) words from a key word spotting (KWS) detector, and there can also be events related to medical emergencies, for example, detected events from captured biological or contextual signals (e.g., indoor positions anomalies such as lack of movement, metrics/signals that are indicative of a heart attack or other health anomaly, such as heart rate, blood pressure, respiratory rate, temperature, oxygen saturation, blood glucose level, data related to EEG, ECG, EMG, EOG, ERG, EGG, GSR o EDA...).The event detectors used are not CPU-intensive and can run efficiently on a broad range of devices. This approach ensures user privacy-preserving data management while also eliminates delays in event detection. There is a predefined knowledge database **240** that is consulted to determine when an event or a set of events should trigger an action or actions. Thus, using the information from the knowledge database **240** and from the analysis of the events **210,** an emergency may be detected **220.** If so, then predefined actions are triggered **230.** This knowledge database **240** is continuously improved by using the feedback **150** provided/delivered by the causality supervisor **130.**

The causality supervisor **130,** as defined within a possible embodiment, is a smart end device operated by a human evaluator responsible for analyzing all events, actions, and validations and configured to provide the system with the feedback 150. The human evaluator involved in causality supervision can be a person that already is part of the system as the actor playing the role of caregiver or a family member of the person under surveillance. In fact, the cared user, in some case, can also take the role of the human evaluator for causality supervision, if a false negative was produced, to adapt the system to its needs. Also, the causality supervisor **130** can be completely a piece of software or other technology that does not need human supervision. The event detection is then a self-learning process which is autonomously supervised and relies on past interventions, which may or may not be validated either by humans or automatically. The accumulated data from the home user is stored on a remote server accessible by the aforementioned smart end device that can run very large deep learning models such as Large Language Models (LLM) for the evaluation of the data of events, actions, and validations. This data is then transferred from the respective (home user and actors) end devices by employing a communication protocol equipped to handle data streams. Protocols such as Kafka or MQTT (Message Queuing Telemetry Transport) serve as suitable examples for this purpose. Upon completion of the causality assessment, the causality supervisor **130** transmits the necessary modifications or data back to the home user's device. This transmission is primarily intended for updating a local knowledge database used by the home user's device. The causality assessment procedure involves an examination of various activities inclusive of events, actions, and validations. The key objective is to determine whether the actions, that were initiated, align as the appropriate response to a given emergency.

Once an event (or a sequence of events, wherein video events or audio events, acoustic signals that may come from an emergency or words from a KWS) is detected **210,** the knowledge database **240** is used to determine if it constitutes an emergency or if it is part of a chain of events that could lead to an emergency. If an emergency is detected **220,** the system triggers actions **230** which can be executed locally or by involving third-party entities. If executed locally, the system logs all events and actions for causality supervision **130.** If third parties are involved, the system notifies or communicates with them until they are aware of the situation, and they take over the emergency management. The events and actions that occur are registered to facilitate causality supervision **130.** In addition, once the emergency is under control, actors **120** provide validation **160,** which complements the causality supervision **130.** The causality supervisor **130** aims to improve the process continually. The causality supervisor **130** periodically evaluates detected events to determine if actions that should have been taken were not taken. The causality supervisor **130** also considers the events and actions that were taken, and the validation **160** provided by actors **120** through end devices when third parties (familiar/caregiver) were involved. Based on this information, the local knowledge database **240** is updated, allowing for continuous adaptation and improvement of the emergency management process.

The local knowledge database **240** defines a predefined behaviour that can be updated over time. (Home) Users can also personalize the domestic event detection and define some of the actions that must be taken to suit their needs. This approach ensures the emergency management process is continuously adapted or reinforced, improving the system's effectiveness over time.

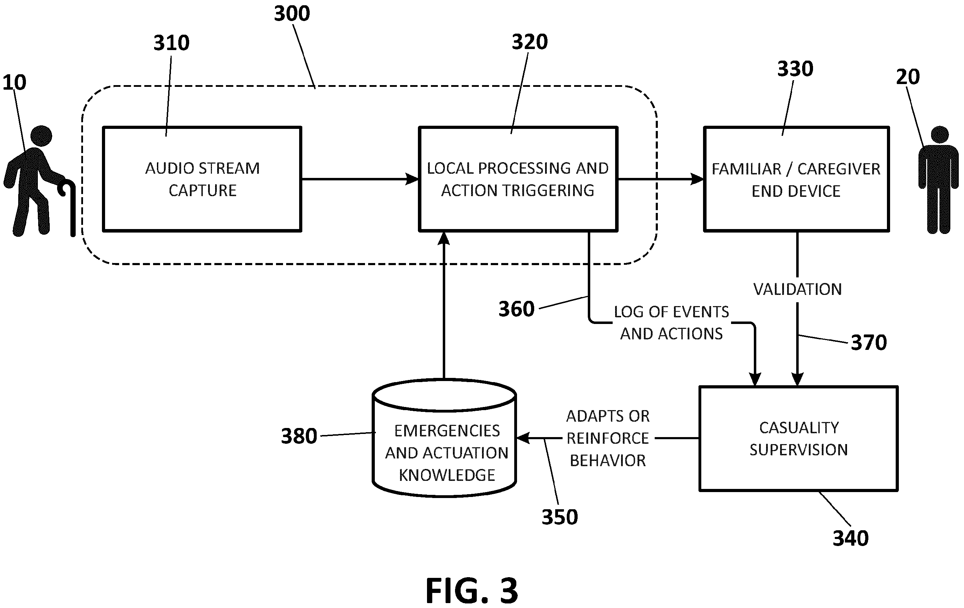

Figure 3 depicts a preferred embodiment wherein monitoring indoor events **100** is carried out locally using an audio capturing device. At least two human roles are distinguished: a home user **10** (i.e., the monitored or cared user) and an external user **20** (e.g., a familiar or caregiver). For local audio stream capture **310,** any existing device in the user's house that has a microphone is used; this includes: mobile phones, smart speakers, smart watches, computers, etc. The audio stream capturing device delivers the audio data to processing means for the local processing **320** of the audio data from the captured stream, so that audio events are classified by using a lightweight neural network and actions are triggered based on this classification. The steps of local audio capture **310** and the local processing **320** are performed in a home user end device **300** (e.g., smartphone, smart speaker, an intelligent assistant, a tablet, a user's personal computer, a laptop, a TV set or a wearable programmable device, etc.). Thus, the lightweight neural network efficiently runs on the constrained home user end device **300** to detect specific speech or other acoustic events that only happen in emergencies. In other words, generic audio classification and keyword spotting are performed aiming at identifying any manifestation of violence, emergencies, or people in pain. Some examples of events classification are screams, hits, broken glasses, crying, etc. Similarly, speech events as words matching stress conditions of an emergency or panic phrases are recognized. Once an emergency is detected, the predefined familiar or caregiver (external user **20**) is contacted through an external user end device **330** to manage the emergency by selecting which actions from the set of triggered actions are taken (some actions may be taken by the external user **20** or other third-party, some actions may be taken locally in the environment of the user **10,** and the external user **20** may enable/disable to take actions). When the situation is under control, the familiar or caregiver provides a validation **370** on whether the set of events and actions were correctly taken. Finally, the causality supervisor **340** reviews the log of events and actions **360** and actor's validation **370** to seek improvements. Finally, the local knowledge database **380** to detect emergencies and trigger actions is updated, so the behaviour is adapted or reinforced **350.** As described before, for example, in case that a false negative was produced, the home user **10** can also play the role of providing feedback to adapt the system as the causality supervisor **340.**

Using neural networks as a mechanism to analyze and detect indoor emergency events allows many implementation options to build a lightweight architecture to perform pattern recognition. The wide span covers Convolutions Neural Networks, Recurrent Neural Networks, Residual Networks (ResNets), Lambda Networks, Performers, Broadcasted Residual Learning, among others.

In the preferred embodiment, the system is configured to establish communication with external user end device **330** owned by a trusted individual, who may be designated by the person being cared for, in the event of an emergency. This default action ensures that prompt and appropriate action can be taken by a familiar party who is also knowledgeable about the person's condition and needs. This communication is accomplished by using Voice over IP (VoIP) to create a bidirectional multimedia channel of information. The communication is established using an advanced stack of protocols, including the Session Initiation Protocol (SIP), Session Description Protocol (SDP), and Real-time Transfer Protocol (RTP). Therefore, the person who is being cared for (the home user) can have access to a softphone (this device may be the home user end device **300** or not but must be communicated with external user end device **330**). Thus, the trusted individual can be reached through the external user end device **330** which can be another softphone or smartphone.

In the home user end device **300** a set of rules is defined: the set of rules is predefined in the local knowledge database **380** used to detect an emergency and to trigger a set of actions. These rules define what acoustic events or combinations of them can be considered as an emergency, and how to act in case of it. For instance, the detection of a specific word with concrete stress conditions is enough to determine that an emergency is happening. In other cases, a combination of acoustic events is needed to consider the situation as an emergency. Furthermore, depending on the actions to be triggered, user's house actions can be executed locally or may imply the participation of third parties. In the preferred embodiment, the default action is to call an external user who is a trusted contact as a familiar or a caregiver. By doing so, a human can evaluate what is happening in the domestic environment and continue (enable) acting if needed, so the emergency management is delegated to a human. Once the emergency is under control, the familiar or caregiver provides the validation **370** on whether the set of detected events really need the implication of the third party (the trusted contact).

All events and actions are logged to a server to be evaluated in terms of causality. The log of events and actions **360** is stored in the server in an encoded format, e.g., speech parameter for audio, embeddings for text tokens or one-hot-encoding for actions, ensuring privacy for local database. This log or set of events and actions **360** along with the familiar/caregiver's validation **370** are considered to reinforce or adapt **350** the system's behaviour. Additionally, even if no actions have been taken, periodically events that happened in the domestic environment are logged. This allows dealing with false negatives and correct future behaviour. The assessment of events yields, at least, three potential outcomes:
- Firstly, a false positive might occur where the actions triggered by the same set of events necessitate behavioral adaptation to prevent recurrence.
- Secondly, if the executed action does not appropriately correspond to the severity of the encountered emergency, there is a need for behavioral adaptation.
- Finally, when there is an accurate match between the nature of the emergency and the actions taken, behavioral reinforcement is required.

Regarding the stream of information that can be captured and analyzed to detect events related with the user safety, there are many possibilities, not only limited to audio streams. For instance, if a camara is available, the video stream of information can be used to detect events in the indoor space. Similarly, other sources of information that measure any vital sign can be used as the electrocardiogram, motion sensors, or pulse oximetry. In addition, multiple sources of information can be combined to be complemented.

Within this approach, no audio, video, biological data or contextual information is going out of the user's home, instead anonymized events and actions **360** are sent. Thus, the user's privacy is preserved, and no delay is introduced in emergency detection, thanks to the on-device processing and acting strategy. Another human is operating the causality supervisor **340** which can use other technologies to accomplish its supervision. One example is the use by the causality supervisor **340** of LLMs to perform reasoning and causality assessment using Chain-of-Thought. From this evaluation, the causality supervisor **340** decides how to update the local knowledge database **380** to adapt or reinforce **350** future behaviour.

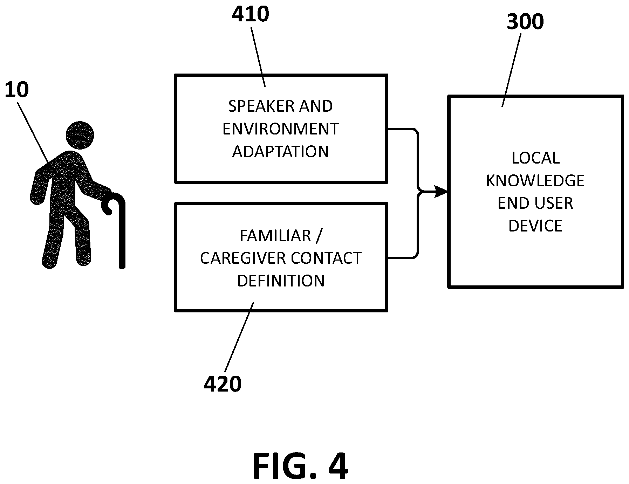

An enrolment phase is conducted so that the home user can adapt the local knowledge database **380** to personalize event detection and acting. This enrolment process is shown in Figure 4. The enrolment process consists of two steps: First, adapting **410** the emergency detection model locally to the (domestic) environment in which the user **10** is monitored and to work only with a target device for capturing streams of information; in the example, a target speaker voice. Thus, the first step is adapting **410** the keyword spotting model to the user's environment, for example, through a domain-adaptation methodology to tackle accuracy losses caused by onsite environmental noises, noise reduction of the signal (e.g., speech enhancement, signal separation), contextual adaptation based on the distance from the sound source (energy normalization), and adapting **410** the keyword spotting model by detecting a target speaker (speaker dependent keyword spotting). Second, as the preferred action is to call a familiar or a caregiver, the home user configures **420** the emergency contacts to delegate emergency management to those trusted individuals by defining a minimum number of familiars or caregivers to be contacted in the case of an emergency detection. This configuration based on the personalized information is locally stored on-device; i.e., in the local knowledge database **380,** internal or externally, communicated with the home user end device **300.**

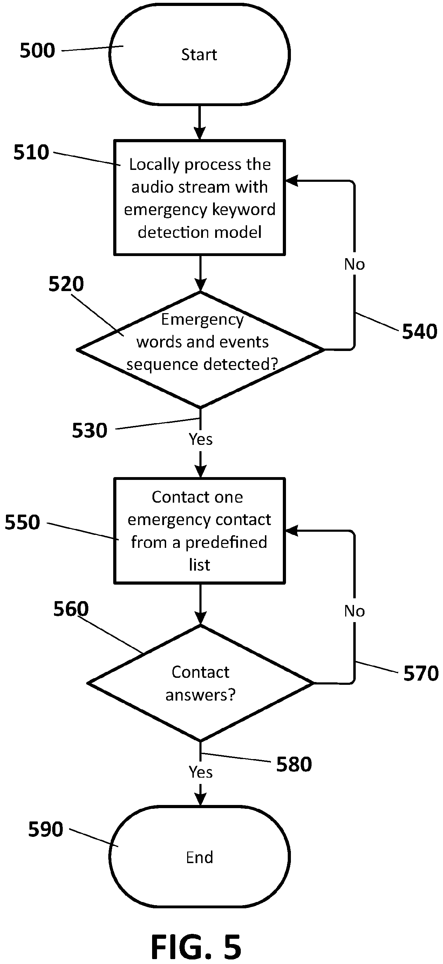

Once the enrolment for user's personalization is done, in the example, the system continuously listens to the audio stream until an emergency word is pronounced. In such case, the system contacts the predefined contacts until one of them answers. In that moment, the emergency management is delegated to the familiar or caregiver. This flow is illustrated in Figure 5: The system is always capturing streams of information locally **500;** in the example, listening audio streams which are locally processed **510** using the emergency (keyword) detection model to detect emergency words or any events sequence **520.** If no emergency word (events sequence) is detected, the system keeps in a loop of keyword spotting. In the positive case **530** of emergency word detection, one of the emergency contacts from a predefined list is contacted **550.** If it answers, then the responsibility for handling the emergency is then delegated to the contact and wait for an answer **560** from the contact. In the case that there is not answer **570,** the process is repeated with another contact from the predefined list, until an answer is received **580** from one of the emergency contacts and so the events monitoring flow ends **590.**

According to a possible embodiment, a detailed description on how to build the lightweight keyword spotting of emergency words is presented. As any neural network-based problem, a database is required to train the model. These data comprise recordings of the target emergency keywords, i.e., typical words that are a sign of emergency; for instance, in Spanish emergency keywords may be: "ayuda", "auxilio" and "socorro"; and other non-target speech as spontaneous speech and read speech. These data can include not only words but also, for example, acoustic events that may indicate an emergency situation, such as the noise from a person or heavy object falling, the sound of a blow, the breaking of glass, and so on. All these data are intentionally recorded to match the prosodic and stress conditions of emergencies (fear, pain, etc.). In addition, audio data are completed with metadata as anonymously speaker identifier, accent, age, gender, recording device, room size, and transcription of the spoken content. These metadata can be used to balance batches during training time, helping the model to generalize well. In addition, metadata can also be used to target a population group.

A data processing is applied to the recorded data to improve the effectiveness of the training process; thus, the model can generalize well. In this case, temporal annotations on when happen the target speech event are obtained using automatic alignment methods. Thus, the target speech events are well located in time. In addition, to increase the amount of data samples, clean samples can be combined with different noises using a wide range of Signal-to-Noise Ratio (SNR). This aims to increase the robustness in noisy environments. Moreover, Room Impulsive Responses are used to simulate its occurrence in different acoustic environments, as for example, utter an emergency word from a different room.

Regarding the feature extraction of data, the emergency keyword spotting model is fed with extracted Mel-Frequency Cepstral Coefficients (MFCC). This is preferred instead of the Mel-spectrogram, to minimize the energy information of the signal. Furthermore, audio normalization operations are applied, and the zeroth coefficient is replaced with the log energy.

Many solutions are available for the implementation of lightweight neural network. which can be built by limiting the number of operations and parameters for design. In any case, "lightweight" refers to a neural network that can be run on the end-user device **300** and can be achieved in other ways. The wide span covers Convolutional Neural Networks, Recurrent Neural Networks, Residual Networks (ResNets), Lambda Networks, Performers, Broadcasted Residual Learning, or others. In the preferred embodiment, Gated Recurrent Neural Networks (GRU) are used to process the sequence of MFCCs. The final memory state is processed with a linear layer for the classification of emergency words.

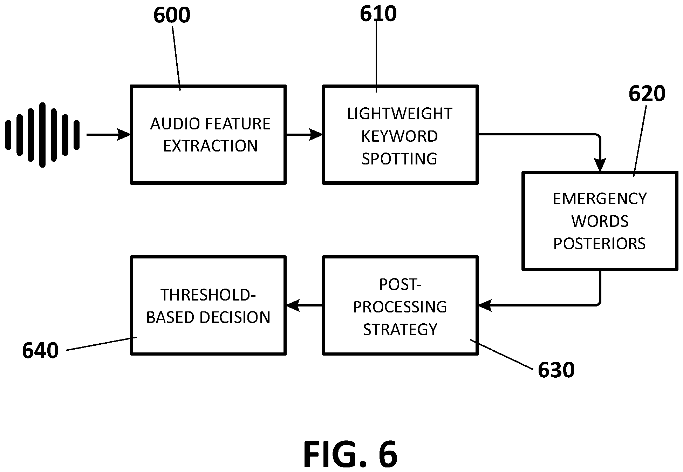

Once the model is correctly trained and evaluated, it must be prepared for its use in a real-time processing scenario. To begging with, the model inputs a fixed-length audio window. The length must be given from the deep analysis of the selected keyword duration distributions. For instance, a length of 1.5 seconds covers a major part of audio length distributions of the Spanish keywords: "ayuda", "auxilio" and "socorro". The audio stream is processed by using sliding window. In addition, the above-mentioned feature extraction that is done during training must also be done in real-time processing. Concretely, for each audio window, features are extracted, the model produces the probability of each of the possible outputs, the probability is post-processed (e.g., combined with other temporal probabilities), and finally, the decision is taken based on a stablish threshold. Figure 6 depicts this process of on-device real-time audio processing, implementable in the home user end device **300:** First, the raw audio sequence is processed to extract only relevant information, this process is called feature extraction **600.** Second, a neural network configured to perform a lightweight keyword spotting **610** processes the audio features sequence and produces a sequence of probabilities **620.** Third, the produced probabilities are post-processed **630** to remove noise. Finally, a threshold-based decision **640** is taken from the score obtained according to the produced probabilities.

Additionally, apart from limiting the number of parameters from design, the process of deployment follows three steps:
- Post-training quantization, to reduce size and maximize that inference speed by changing default bit-length to any smaller type (e.g., from 32-bit float to an 8-bit integer). This process could be done, among other ways, after training to not limit the model to target hardware from the beginning.
- After, a representation of the model that can be executed in the target backend is obtained. One example with PyTorch is to use ExecuTorch generate a serialized and optimized representation of the model.
- Finally, mobile optimization is done to optimize operations of the network to reduce size and inference time. For instance, the fusion of 2D convolutions with batch normalization in a single step.

The ultimate goal of the deployment process is for inferences to be executed locally in an agile manner. One technique is, from the design stage, to limit the number of parameters and operations. But in addition, there are other techniques like quantization, but these are different possibilities to reduce the complexity of the model in inference.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A system for emergency monitoring and acting in domestic environments, the system **characterized by** comprising:
- a home user end device (300) of a user (10) located in a user's environment, the home user end device (300) configured to:
- capture information streams (200, 310);
- detect events (210) by locally processing (320) the captured information streams, wherein the locally processing (320) uses a lightweight neural network configured to classify the detected events by performing pattern recognition;
- detect whether there is an emergency (220) based on the classified events and information from a knowledge database (240) to which the home user end device (300) has access;
- if emergency is detected, trigger (230) a set of actions predefined in the knowledge database (240, 380) for the detected emergency;
the home user end device (300) being communicated through a first communication protocol with a causality supervisor (130, 340) configured to:
- receive data through the first communication protocol, the data comprising a log (140, 360) of the detected events and, if emergency detected, of the triggered actions,
- periodically evaluate the received data to determine whether all the set of triggered actions is correctly taken for the log (140, 360) of the detected events, and
- update the knowledge database (240, 380) according to the evaluation of the received data and deliver a feedback (150) based on the evaluation to the lightweight neural network, the lightweight neural network learning from the feedback (150).

2. The system according to claim 1, wherein the home user end device (300) is further communicated through a second communication protocol with an external user end device (330) of an external user (20) configured to, if emergency is detected:
- establish a communication through the second communication protocol with the home user end device (300) to contact the user (10);
- select which actions from the set of triggered actions are taken;
- send a validation (160, 370), through the first communication protocol, to the causality supervisor (130, 340), the validation (160, 370) being provided by the external user (20) and indicating whether all the set of triggered actions is selected and correctly taken;
and wherein the data received by the causality supervisor (130, 340) further comprises the validation (160, 370) sent by the external user end device (330).

3. The system according to claim 2, wherein the second communication protocol is VoIP.

4. The system according to any preceding claim, wherein the first communication protocol is Kafka or MQTT.

5. The system according to any preceding claim, wherein the home user end device (300) is a smartphone, a softphone, a smart speaker, an intelligent assistant, a tablet, a personal computer, a laptop, a TV set or a wearable programmable device.

6. The system according to any preceding claim, wherein the lightweight neural network is a convolutions neural network, a recurrent neural network, a residual network, a lambda network, a performer network, or a broadcasted residual learning network.

7. The system according to any preceding claim, wherein the set of actions triggered if emergency is detected is executed locally in the user's environment or is executed by third-parties external to the user's environment.

8. The system according to any preceding claim, wherein the evaluation of the received data by the causality supervisor (130, 340) uses Large Language Models.

9. The system according to any preceding claim, wherein the captured information streams (200, 310) are selected between audio streams, video streams, biological data streams and contextual data streams.

10. A method for emergency monitoring and acting in domestic environments, the method **characterized by** comprising the following steps:
- capturing information streams (200, 310) by a home user end device (300) located in a user's environment of a user (10),
- detecting events (210) by locally processing (320) the captured information streams by the home user end device (300), wherein the locally processing (320) uses a lightweight neural network configured to classify the detected events by performing pattern recognition;
- detecting by the home user end device (300) whether there is an emergency (220) based on the classified events and information from a knowledge database (240) to which the home user end device (300) has access;
- if emergency is detected, triggering (230) a set of actions by the home user end device (300) predefined in the knowledge database (240, 380) for the detected emergency;
- receiving data through a first communication protocol from the home user end device (300) to a causality supervisor (130, 340), the data comprising a log (140, 360) of the detected events and, if emergency detected, of the triggered actions,
- evaluating the received data periodically by the causality supervisor (130, 340) to determine whether all the set of triggered actions is correctly taken,
- updating the knowledge database (240, 380) by the causality supervisor (130, 340) according to the evaluation of the received data,
- delivering a feedback (150) by the causality supervisor (130, 340) based on the evaluation to the lightweight neural network and the lightweight neural network learning from the feedback (150).

11. The method according to claim 10, further comprising, if emergency is detected,
- establishing a communication through a second communication protocol between the home user end device (300) and an external user end device (330) of an external user (20) to contact the user (10),
- selecting through the external user end device (330) which actions from the set of triggered actions are taken;
- sending a validation (160, 370), through the first communication protocol, from the external user end device (330) to the causality supervisor (130, 340), the validation (160, 370) being provided by the external user (20) and indicating whether all the set of triggered actions is selected and correctly taken;
and wherein the data received by the causality supervisor (130, 340) further comprises the validation (160, 370) sent by the external user end device (330).

12. The method according to claim 11, wherein the second communication protocol is VoIP.

13. The method according to any of claims 10-12, wherein the first communication protocol is Kafka or MQTT.

14. The method according to any of claims 10-13, wherein the lightweight neural network is a convolutions neural network, a recurrent neural network, a residual network, a lambda network, a performer network, or a broadcasted residual learning network.

15. The method according to any of claims 10-14, wherein evaluating the received data by the causality supervisor (130, 340) uses Large Language Models.
